# EUROPÄISCHE PATENTSCHRIFT

(11) **EP 1 601 873 B1**
(45) Veröffentlichungstag und Bekanntmachung des Hinweises auf die Patenterteilung: **11.07.2012**
(21) Anmeldenummer: 04713060.4
(22) Anmeldetag: 20.02.2004
(51) Int. Cl.: F04B 1/04, F16J 15/08

(54) **Kombination einer Flachdichtung mit einer Kraftstoffhochdruckpumpe.**
Combination of a flat gasket and a high pressure fuel pump.
Combinaison d'un joint plat avec une pompe à carburant haute pression.

(30) Priorität: 07.03.2003 DE 10310124
(43) Veröffentlichungstag der Anmeldung: 07.12.2005
(73) Patentinhaber: Continental Automotive GmbH, 30165 Hannover (DE)
(72) Erfinder: HUBER, Karl, 97855 Lengfurt (DE); LEUTWEIN, Hans-Ulrich, 97846 Partenstein (DE); WEIDNER, Matthias, 97535 Wasserlosen (DE); DUSSLER, Karl, 89233 Neu-Ulm (DE); LUDWIG, Josef, 89168 Niederstotzingen (DE)
(86) Internationale Anmeldenummer: PCT/EP2004/001699
(87) Internationale Veröffentlichungsnummer: WO 2004/079189

(56) Entgegenhaltungen:
- EP-A- 1 197 689
- EP-A- 1 279 871
- DE-A- 10 060 872
- US-A- 3 108 818
- US-A- 6 036 195

## Beschreibung

Die Erfindung betrifft eine Kombination einer Flachdichtung mit einer Kraftstoffhochdruckpumpe.

Aus der DE 198 41 642 C2 ist eine Kraftstoffhochdruckpumpe bekannt, die ein Pumpengehäuse und mehrere Zylinderköpfe aufweist. Jeder Zylinderkopf ist über einen Zentrieransatz im Pumpengehäuse fixiert. Vom Pumpengehäuse führt eine Ansaugleitung in den Zylinder. Der Kraftstoff gelangt von der Ansaugleitung über ein Ansaugventil zum Zylinderraum. Dort wird der Kraftstoff verdichtet und gelangt anschließend über ein Hochdruckventil und eine Hochdruckleitung zurück in das Pumpengehäuse, von wo der Kraftstoff zu einem gemeinsamen Hochdruckspeicher, dem sogenannten Common-Rail, gelangt. Zwischen dem Zylinder und dem Pumpengehäuse ist eine O-Ringdichtung angeordnet. Zur Aufnahme der O-Ringdichtung weist der Zylinderkopf eine Nut auf. Das Einlegen des O-Rings erfordert einen hohen Montageaufwand und es kann leicht passieren, dass der O-Ring nicht richtig in der Nut liegt. Beim Verschrauben des Zylinderkopfs wird der O-Ring dann zwischen den Dichtflächen der beiden Bauteile eingequetscht und beschädigt. Dadurch kann Kraftstoff aus der Kraftstoffhochdruckpumpe austreten.

Die EP 1 279 871 A2 offenbart eine Zylinderkopfdichtung, die gebildet ist aus einer Metallplatte, einer in der Metallplatte um eine Flüssigkeitsöffnung ausgebildeten Dichtsicke und einer in der Metallplatte ausgebildeten Randsicke, die sich in einem Randbereich der Metallplatte erstreckt. Mindestens ein Teil der Randsicke ist für einen Flächendruck ausgebildet, der niedriger ist als der der Dichtsicke, wenn die Dichtung festgezogen ist. Dieser Effekt wird dadurch erzielt, dass die Höhe der Randsicke kleiner ist als die Höhe der Dichtsicke oder die Breite der.Randsicke größer ist als die Breite der Dichtsicke.

Die Aufgabe der Erfindung ist es daher, bei einfacher Montage der Dichtung eine sichere Abdichtung der Kraftstoffhochdruckpumpe zu gewährleisten.

Die Aufgabe wird gelöst durch die Merkmale des Patentanspruchs 1. Vorteilhafte Ausgestaltung der Erfindung sind in den Unteransprüchen gekennzeichnet.

Die Erfindung zeichnet sich dadurch aus, dass die Dichtung als Flachdichtung ausgeführt ist. Die Flachdichtung besitzt eine erste Ausnehmung für den Zylinderkopf, eine zweite Ausnehmung für den Hochdruckkanal und eine dritte Ausnehmung für den Ansaugkanal. Um die Ausnehmung für den Hochdruckkanal herum ist eine erste Dichtsicke und um die Ausnehmung für den Ansaugkanal herum ist eine zweite Dichtsicke ausgebildet. Zusätzlich ist in der Flachdichtung eine dritte Dichtsicke ausgebildet, welche die erste sowie die zweite Dichtsicke umschließt. Eine Entlastungsöffnung ist innerhalb der von der umschließenden Dichtsicke liegenden Fläche eingebracht, wobei durch die Entlastungsöffnung die von einer Undichtigkeitsstelle austretende Flüssigkeit aus dem Raum, welcher durch die dritte Dichtsicke gebildet wird, abfließen kann. Hierdurch ist gewährleistet, dass im Falle einer Undichtigkeit der ersten und/oder zweiten Dichtsicke kein Kraftstoff über die Dichtflächen nach außen gelangen kann sondern durch die dritte umschließende Dichtsicke die Dichtigkeit der Flachdichtung jederzeit gewährleistet bleibt.

Um eine besonders sichere Abdichtung im Bereich des Hochdruckkanals zu gewährleisten, sieht eine vorteilhafte Ausgestaltung der Erfindung vor, um die Ausnehmung für den Hochdruckkanal herum eine Dichtsicke mit koaxialer Profilierung, vorzugsweise mit einem wellen- und/oder sägezahnförmigen Profil auszubilden. Eine solche profilierte Dichtsicke ist bereits aus der DE 100 60 872 A1 bekannt, dessen Offenbarungsgehalt diesbezüglich einbezogen wird.

In einer besonders bevorzugten Ausgestaltung der Erfindung sind an der Flachdichtung Positionierungslaschen ausgebildet. Mit Hilfe der Positionierungslaschen lässt sich die Flachdichtung exakt positionieren wodurch eine fehlerhafte Montage weitgehend ausgeschlossen wird.

Ein Ausführungsbeispiel der Erfindung wird im Folgenden anhand der schematischen Zeichnung erläutert. Es zeigen:
Figur 1 eine dreidimensionale Darstellung der erfindungsgemäßen Flachdichtung und
Figur 2 eine Detailansicht einer Kraftstoffhochdruckpumpe mit einer Flachdichtung nach Fig. 1.

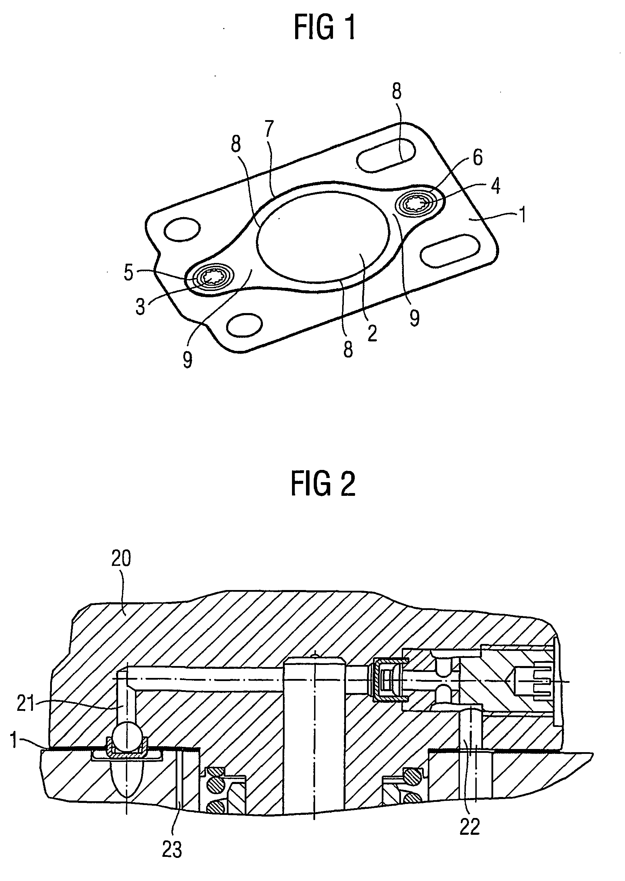

Figur 1 zeigt eine dreidimensionale Darstellung der Flachdichtung und Figur 2 eine Detailansicht einer Kraftstoffhochdruckpumpe mit der in Figur 1 dargestellten Flachdichtung. Die Figuren sind nachfolgend gemeinsam erklärt.

Die Flachdichtung 1 weist eine erste Ausnehmung 2 für den Zylinderkopf 20, eine zweite Ausnehmung 3 für den Hochdruckkanal 21 und eine dritte Ausnehmung 4 für den Ansaugkanal 22 auf. Um die Ausnehmung für den Hochdruckkanal sowie um die Ausnehmung für den Ansaugkanal sind jeweils eine erste beziehungsweise zweite, im Wesentlichen kreisförmige, Dichtsicke 5, 6 ausgebildet. Die erste Dichtsicke 5 für den Hochdruckkanal weist eine koaxiale Profilierung mit mehreren Wellen auf. Durch die schmalen ringförmigen Berührungsflächen der profilierten Dichtsicke an den abzudichtenden Bauteilen ergibt sich eine hohe Flächenpressung. Die zweite Dichtsicke 6 für den Ansaugkanal kann als einfache Dichtsicke ausgebildet werden, da der Flüssigkeitsdruck im Ansaugkanal gering ist. Zusätzlich zu der ersten und zweiten Dichtsicke 5, 6 ist eine zusätzliche dritte Dichtsicke 7 in der Flachdichtung ausgebildet, die derart gestaltet ist, dass sie sowohl die erste als auch die zweite Dichtsicke 5, 6 umschließt. Hierdurch ergibt sich eine besonders sichere Abdichtung. Im Falle einer Undichtigkeit der ersten und/oder zweiten Dichtsicke 5, 6 kann die Flüssigkeit nicht am Gehäuse der Kraftstoffpumpe austreten, sondern wird von der umschließenden Dichtsicke 7 zurückgehalten. Damit sich innerhalb der umschließenden Dichtsicke 7 kein Flüssigkeitsdruck aufbauen kann, besitzt die Flachdichtung 1, innerhalb der von der Dichtsicke 7 umschlossenen Fläche, eine Ablauföffnung 9. Durch die Ablauföffnung 9 kann die von einer Undichtigkeitsstelle austretende Flüssigkeit aus dem Raum, welcher durch die dritte Dichtsicke 7 gebildet wird abfließen. Hierzu ist in der Kraftstoffpumpe eine Ablaufleitung 23 vorgesehen die den Leckagestrom in den Pumpeninnenraum leitet.

Zur einfachen Montage der Flachdichtung zwischen den abzudichtenden Bauteilen oder auf einem der abzudichtenden Bauteile weist die Flachdichtung mehrere Positionierungslaschen 8 auf. Die Positionierungslaschen greifen im montierten Zustand in Ausnehmungen eines angrenzenden Bauteils, wodurch eine schnelle und lagerichtige Montage der Flachdichtung gewährleistet ist. Hierdurch ergibt sich bei der Montage, im Hinblick auf den Stand der Technik, eine deutliche Zeitersparnis. Außerdem wird eine fehlerhafte Montage dadurch weitgehend ausgeschlossen.

Die Flachdichtung ist insbesondere aus einem Federstahl oder einem anderen vorzugsweise kalt verformbaren Metall hergestellt und vorzugsweise zumindest teilweise mit einem Elastomer oder einem anderen geeigneten Kunststoff oder Metall beschichtet. Durch die Beschichtung können Rauhigkeiten an den Dichtflächen des Gehäuses und des Zylinders ausgeglichen werden. Die Beschichtung drückt sich beim Festziehen der Dichtung in die Unebenheiten hinein und füllt diese weitgehend aus wodurch eine sichere Abdichtung gewährleistet wird.

Die vorgeschlagene Erfindung ist somit geeignet mit einem einzigen Bauteil gleichzeitig, sowohl den Hochdruckkanal als auch den Ansaugkanal einer Kraftstoffhochdruckpumpe sicher abzudichten, wobei im Falle einer Leckage der Kraftstoff nicht am Pumpengehäuse austreten kann, sondern durch eine zusätzliche Dichtsicke zurückgehalten wird. Die Dichtsicken besitzen innerhalb eines Temperaturbereichs von -40°C bis + 140°C eine ausreichende Elastizität und gewährleisten somit über den gesamten Einsatzbereich eine sichere Abdichtung. Die Flachdichtung kann auf einfache Weise, beispielsweise durch Stanzen hergestellt werden und ist somit besonders preiswert. Durch zusätzliche Positionierungslaschen ist eine einfache und sichere Montage gewährleistet.

Die Erfindung ist selbstverständlich nicht auf das Ausführungsbeispiel beschränkt. Insbesondere sind auch solche Dichtungen eingeschlossen, bei denen mehr als zwei innere Dichtsicken von einer weiteren Dichtsicke umschlossen werden

## Patentansprüche

1. Kombination einer Flachdichtung mit einer Kraftstoffhoch druckpumpe, wobei die Flachdichtung (1) mit mindestens
- einer ersten Ausnehmung (2) für einen Zylinderkopf,
- einer zweiten Ausnehmung (3) für einen Hochdruckkanal und
- einer dritten Ausnehmung (4) für einen Ansaugkanal versehen ist, wobei die Flachdichtung (1) wenigstens,
- um die Ausnehmung (3) für den Hochdruckkanal herum eine erste Dichtsicke (5) aufweist,
- um die Ausnehmung (4) für den Ansaugkanal herum eine zweite Dichtsicke (6) aufweist und
- eine dritte Dichtsicke (7) aufweist, die die erste und zweite Dichtsicke (5), (6) umschließt,
wobei eine Entlastungsöffnung (9) innerhalb der von der umschließenden Dichtsicke (7) liegenden Fläche eingebracht ist, und wobei durch die Entlastungsöffnung (9) die von einer Undichtigkeitsstelle austretende Flüssigkeit aus dem Raum, welcher durch die dritte Dichtsicke (7) gebildet wird, abfließen kann.

2. Kombination nach einem der vorhergehenden Ansprüche,
**dadurch gekennzeichnet, dass**
die erste Dichtsicke (5), welche um den Hochdruckkanal angeordnet ist, eine koaxiale Profilierung aufweist.

3. Kombination nach Anspruch 2,
**dadurch gekennzeichnet, dass**
die koaxialen Profilierung ein wellen- und/oder sägezahnförmiges Profil aufweist.

4. Kombination nach einem der vorhergehenden Ansprüche,
**dadurch gekennzeichnet, dass**
die Dichtung Positionierungslaschen (8) zur exakten Positionierung der Dichtung zwischen den abzudichtenden Bauteilen oder auf einem der abzudichtenden Bauteile aufweist.

5. Kombination nach einem der vorhergehenden Ansprüche,
**dadurch gekennzeichnet, dass**
die Flachdichtung aus einem Federstahl oder einem, vorzugsweise kaltverformbaren, Metall besteht.

6. Kombination nach einem der vorhergehenden Ansprüche,
**dadurch gekennzeichnet, dass**
die Dichtung zumindest teilweise mit einem Elastomer oder einem anderen geeigneten Kunststoff, oder mit Metall beschichtet ist.

## Claims

1. Combination of a gasket with a high-pressure fuel pump, wherein the gasket (1) is provided with at least
- a first cut-out (2) for a cylinder head,
- a second cut-out (3) for a high-pressure channel and
- a third cut-out (4) for an induction channel, wherein the gasket (1) has at least
- a first sealing bead (5) around the cut-out (3) for the high-pressure channel,
- a second sealing bead (6) around the cut-out (4) for the induction channel and
- a third sealing bead (7) which encircles the first and second sealing bead (5), (6),
wherein a discharge opening (9) is introduced within the surface encircled by the sealing bead (7), and wherein thanks to the discharge opening (9) the liquid escaping from a leak can flow out of the space formed by the third sealing bead (7).

2. Combination according to one of the preceding claims,
**characterised in that**
the first sealing bead (5), which is arranged around the high-pressure channel, has a coaxial profiling.

3. Combination according to claim 2,
**characterised in that**
the coaxial profiling has a wave-shaped and/or sawtooth-shaped profile.

4. Combination according to one of the preceding claims,
**characterised in that**
the seal has positioning tabs (8) for precise positioning of the seal between the components to be sealed or on one of the components to be sealed.

5. Combination according to one of the preceding claims,
**characterised in that**
the gasket consists of a spring steel or of a metal which can preferably be worked cold.

6. Combination according to one of the preceding claims,
**characterised in that**
the seal is coated at least partially with an elastomer or another suitable plastic, or with metal.

## Revendications

1. Combinaison d'un joint plat et d'une pompe à carburant haute pression, dans laquelle le joint plat (1) est pourvu d'au moins
- un premier évidement (2) pour une tête de cylindre,
- un deuxième évidement (3) pour un canal haute pression, et
- un troisième évidement (4) pour un canal d'aspiration, dans laquelle le joint plat (1) présente au moins,
- une première moulure d'étanchéité (5) autour de l'évidement (3) pour le canal haute pression,
- une deuxième moulure d'étanchéité (6) autour de l'évidement (4) pour le canal d'aspiration, et
- une troisième moulure d'étanchéité (7) qui entoure les première et deuxième moulures d'étanchéité (5), (6),
dans laquelle une ouverture de décharge (9) est ménagée au sein de la surface délimitée par la moulure d'étanchéité (7) périphérique et dans laquelle le liquide sortant d'un emplacement dépourvu d'étanchéité peut s'écouler à travers l'ouverture de décharge (9) hors de l'espace formé par la troisième moulure d'étanchéité (7).

2. Combinaison selon l'une quelconque des revendications précédentes,
**caractérisée en ce que**
la première moulure d'étanchéité (5), laquelle est agencée autour du canal haute pression, présente un profilage coaxial.

3. Combinaison selon la revendication 2,
**caractérisée en ce que**
le profilage coaxial présente un profil de forme ondulée et/ou en dents de scie.

4. Combinaison selon l'une quelconque des revendications précédentes,
**caractérisée en ce que**
le joint présente des colliers de positionnement (8) pour le positionnement exact du joint entre les pièces à étancher ou sur une des pièces à étancher.

5. Combinaison selon l'une quelconque des revendications précédentes,
**caractérisée en ce que**
le joint plat est constitué d'un acier à ressort ou d'un métal de préférence déformable à froid.

6. Combinaison selon l'une quelconque des revendications précédentes,
**caractérisée en ce que**
le joint est revêtu au moins en partie d'un élastomère ou d'un autre matériau synthétique approprié ou encore d'un métal.
